# EUROPÄISCHE PATENTANMELDUNG

(11) **EP 3 053 762 A1**
(43) Veröffentlichungstag der Anmeldung: **10.08.2016**
(21) Anmeldenummer: 16153831.9
(22) Anmeldetag: 02.02.2016
(51) Int. Cl.: B60G 7/02, B60G 3/20

(54) **RADAUFHÄNGUNG**

(30) Priorität: 06.02.2015 DE 102015202174
(71) Anmelder: SAF-HOLLAND GmbH, 63856 Bessenbach (DE)
(72) Erfinder: Naber, Thomas Josef, 48683 Ahaus (DE); Tukac, Petr, 6d3739 Aschaffenburg (DE); Weber, Elmar, 48249 Dülmen (DE)
(74) Vertreter: Müller Schupfner & Partner Patent- und Rechtsanwaltspartnerschaft mbB

(57) **Zusammenfassung**

Radaufhängung (1), insbesondere für Nutzfahrzeuge, umfassend einen Querarm (2) und einen Längsarm (4), wobei der Querarm (2) und der Längsarm (4) in einem Verbindungsabschnitt (5) aneinander festgelegt sind, wobei der Querarm (2) in einem Querlager (6) und der Längsarm (4) in einem Längslager (7) um eine gemeinsame Schwenkachse (S) am Rahmen (30) eines Nutzfahrzeuges festlegbar sind, wobei eine Längsebene (L) den Querarm (2) schneidet, und wobei das Querlager (6) von der Längsebene (L) beabstandet ist.

## Beschreibung

Die vorliegende Erfindung betrifft eine Radaufhängung, insbesondere für Nutzfahrzeuge.

Radaufhängungen für Nutzfahrzeuge, insbesondere Einzelradaufhängungen, sind aus dem Stand der Technik bekannt. Dabei hat es sich durchgesetzt, für Einzelradaufhängungen an Nutzfahrzeugen entweder einen Längslenker oder einen Querlenker einzusetzen. Die Längslenkerlösung hat dabei den Nachteil, dass sie sehr komplex ist und einen einseitigen Kragarm aufweist, welcher statisch sehr ungünstig ist. Weiterhin ist der von der Längslenkerlösung beanspruchte Bauraum relativ hoch. Die Querlenkerlösung hat den Nachteil, dass bei einem Ein- und Ausfedervorgang eine starke Spurweitenänderung und/oder Sturzänderung eintritt, wobei zum einen die Reifen stark belastet werden und sich zum anderen das Fahrverhalten des Nutzfahrzeuges ändert. Darüber hinaus ist insbesondere bei Doppelquerlenkeranordnungen eine Vielzahl von Bauteilen erforderlich, welche eine hohe Komplexität und ein hohes Gewicht der Einzelradaufhängung verursachen.

Aufgabe der vorliegenden Erfindung ist die Bereitstellung einer neuen Radaufhängung, welche die Nachteile der aus dem Stand der Technik bekannten Lösungen vermeidet und insbesondere einfach herzustellen und gewichtssparend ist und gleichzeitig in der Lage ist, die hohen im Bereich des Nutzfahrzeugfahrwerkes auftretenden Momente und Kräfte aufzunehmen.

Diese Aufgabe wird gelöst mit einer Radaufhängung gemäß Anspruch 1 sowie einem Fahrwerkssystem nach Anspruch 7.

Erfindungsgemäß umfasst die Radaufhängung, insbesondere eine Radaufhängung für Nutzfahrzeuge, einen Querarm und einen Längsarm, wobei der Querarm und der Längsarm in einem Verbindungsabschnitt aneinander festgelegt sind, wobei der Querarm in einem Querlager und der Längsarm in einem Längslager um eine gemeinsame Schwenkachse am Rahmen eines Nutzfahrzeuges festlegbar sind, wobei eine Längsebene den Querarm schneidet und wobei das Querlager von der Längsebene beabstandet ist. Die Radaufhängung des Nutzfahrzeuges ist insbesondere bevorzugt eine Einzelradaufhängung, d. h., mit anderen Worten, dass nur ein Rad oder ein Zwillingspaar von Fahrzeugrädern an der Radaufhängung relativ zum Rahmen des Nutzfahrzeuges gelagert ist. Insbesondere bevorzugt ist die Radaufhängung dabei Teil einer lenkbaren Radaufhängung, wobei das Rad des Nutzfahrzeuges vorzugsweise über einen Lenkzapfen unmittelbar oder mittelbar über zwischengelagerte Elemente, wie eine Radlagerung bzw. Radaufhängung, schwenkbar an der Radaufhängung festlegbar ist. Die beiden Hauptkomponenten der Radaufhängung sind der Querarm und der Längsarm, welche vorzugsweise im Wesentlichen quer zueinander stehen, d. h., mit anderen Worten, dass die Haupterstreckungsrichtungen des Querarmes und des Längsarmes in einem Winkel zueinander stehen, welcher vorzugsweise größer als 10° und insbesondere bevorzugt kleiner 130° ist. Der Querarm und der Längsarm sind in einem Verbindungsabschnitt aneinander festgelegt. Das heißt, dass sie beispielsweise stoffschlüssig durch Schweißen miteinander verbunden sein können, oder beispielsweise bereits einstückig miteinander hergestellt sind. Insbesondere bevorzugt ist es, dass der Querarm und der Längslenker in einem gemeinsamen Gussverfahren hergestellt und aneinander festgelegt sind, da auf diese Weise zum einen Fertigungszeit und - kosten reduziert werden können und zum anderen die Festigkeit des Verbundes auf Querarm und Längsarm besonders hoch ist. Vorzugsweise weist der Querarm ein distales Ende auf, an welchem er in einem Querlager am Rahmen eines Nutzfahrzeuges festlegbar ist. Weiterhin bevorzugt weist auch der Längsarm ein distales Ende aus, in welchem er in einem Längslager am Rahmen des Nutzfahrzeuges festlegbar ist. Besonders bevorzugt ist es, dass der Querarm und der Längsarm jeweils im Querlager und im Längslager am Rahmen des Nutzfahrzeuges festgelegt sind. Dabei sind das Querlager und das Längslager derart ausgebildet, dass der Verbund aus Querarm und Längsarm um eine gemeinsame Schwenkachse relativ zum Rahmen des Nutzfahrzeuges schwenkbar ist. Der Querarm ist derart ausgelegt, dass er in seinem am Nutzfahrzeug montierten Zustand von einer Längsebene des Nutzfahrzeuges geschnitten wird, wobei das Querlager, welches am distalen Ende des Querarmes vorgesehen ist, von der Längsebene beabstandet ist. Die Längsebene ist vorzugsweise die Mittelebene des Nutzfahrzeuges, bzw. des Nutzfahrzeugrahmens, welche entlang der Längsrichtung des Nutzfahrzeuges und in vertikaler Richtung verläuft. Mit anderen Worten verläuft die Längsebene parallel zur Fahrzeuglängsrichtung und parallel zur Höhe des Nutzfahrzeuges und teilt das Nutzfahrzeug bzw. den Rahmen des Nutzfahrzeuges in zwei gleiche Hälften. Indem der Querarm derart ausgelegt ist, dass er von der Längsebene derart geschnitten wird, dass das Querlager von der Längsebene beabstandet ist, überagt der Querarm somit die Fahrzeugmitte des Nutzfahrzeugrahmens. Mit anderen Worten ist vorzugsweise die Erstreckung des Querarms quer zur Längsebene größer als die halbe Breite des Rahmens des Nutzfahrzeuges. Der Vorteil dieses besonders lang ausgelegten Querarmes ist, dass bei einer Einfeder- und Ausfederbewegung des Querarmes, also einer Verschwenkung um die Schwenkachse, eine nur geringe Veränderung des Sturzes und der Spur des an der Radaufhängung vorzugsweise festgelegten Fahrzeugrades auftritt. Dies vermeidet insbesondere bei Einsatz des Nutzfahrzeuges mit regelmäßig verschiedenen Zuladungen und daraus resultierenden unterschiedlichen Einfederzuständen, dass die Reifen des Nutzfahrzeuges ungleichmäßig auf den Außen- und Innenseiten beansprucht werden und der Sturz der Räder des Nutzfahrzeuges sich ändert. Die Ausbildung der Radaufhängung mit einem Querarm und einem Längsarm sorgt andererseits für eine besonders gute Kraftaufnahme und Übertragung sowohl der Querkräfte, welche bei Kurvenfahrt des Nutzfahrzeuges auftreten sowie der Längskräfte, welche bei Beschleunigen und Bremsen des Nutzfahrzeuges auf die Radaufhängung einwirken an den Rahmen des Nutzfahrzeuges. Hierbei weist die erfindungsgemäße Radaufhängung besondere Vorteile gegenüber einer Radaufhängung, welche nur Querlenker aufweist, auf. Insbesondere weist die erfindungsgemäße Radaufhängung dabei die Fähigkeit auf, Längs- und Querkräfte in gleicher Weise günstig an den Rahmen zu übertragen, wobei auch die vorzugsweise nur in Schwenkrichtung bzw. um die Schwenkachse schwenkbare Aufhängung im Querlager und im Längslager eine besonders einfache und robuste Konstruktion dieser beiden Aufhängungspunkte der Radaufhängung erlaubt.

In einer bevorzugten Ausführungsform steht die Schwenkachse zur Längsebene in einem ersten Winkel, wobei der erste Winkel größer 0° und kleiner 90° ist. Bevorzugt steht die Schwenkachse somit nicht parallel und nicht ortogonal bzw. senkrecht zur Längsebene. Durch diese Ausrichtung der Schwenkachse und somit auch der schwenkbaren Lagerung der Radaufhängung in dem Querlager und dem Längslager können vorzugsweise besonders hohe Längskräfte durch die Radaufhängung übertragen werden. Ein Winkel der Schwenkachse von 90° wäre somit der Fall eines Längslenkers, während ein Winkel der Schwenkachse von 0° zur Längsebene der Schwenkbewegung eines Querlenkers entsprechen würde. Die vorliegende Erfindung stellt einen Kompromiss zwischen diesen beiden Radaufhängungsformen her und vereint die Vorteile der jeweiligen Hauptkraftübertragungsrichtung der Längslenker- und der Querlenkerausbildung. Bei einer Schwenkbewegung des Querarmes und des Längsarmes um eine Schwenkachse, welche nicht parallel zur Längsebene ausgerichtet ist, tritt eine geringfügige Veränderung der Spur des Nutzfahrzeuges auf, welche jedoch im Rahmen der vorliegenden Erfindung so gering ausfällt, dass sie in Kauf genommen werden kann.

In einer besonders bevorzugter Ausführung beträgt der Winkel 5° bis 75°, vorzugsweise 10° bis 65° und besonders bevorzugt ca. 30° bis 50°. Der größte Winkelbereich von 5° bis 75° umfasst dabei sämtliche der im Rahmen der vorliegenden Erfindung vorgesehen Auslegungen von Nutzfahrzeugen. Dabei ist der kleinste Winkel von 5° für Nutzfahrzeuge vorgesehen, bei welchen die Bremslast auf die Radaufhängung gering ist und es insbesondere auf eine besonders hohe Spurgenauigkeit ankommt. Eine Radaufhängung mit einem Winkel von ca. 5° kommt einem Querlenker am nächsten. Der maximal vorgesehene Winkel von 75° eignet sich insbesondere für Nutzfahrzeug, bei welchen sowohl der Querarm als auch der Längsarm der Radaufhängung besonders hohe Kräfte in Fahrzeuglängsrichtung, oder parallel zur Längsebene übertragen können sollen. Mit einer derartigen Radaufhängung lassen sich insbesondere bevorzugt hohe Bremskräfte von den Rädern über die Radaufhängung an den Rahmen des Nutzfahrzeuges übertragen. Der besonders bevorzugte Bereich von 10° bis 65° eignet sich insbesondere aufgrund des hier gefundenen Kompromisses zwischen den Vorteilen eines Querlenkers und den Vorteilen eines Längslenkers. Dieser Winkelbereich ist insbesondere dann bevorzugt, wenn nur geringe Abweichungen in der Spurgenauigkeit für das Nutzfahrzeug in Kauf genommen werden können. Der insbesondere bevorzugte Bereich von 30° bis 50° eignet sich insbesondere dann, wenn die Radaufhängung des Nutzfahrzeuges besonders leicht und bauraumsparend ausgelegt sein soll und hierbei eine geringe Spuränderung während des Ein- und Ausfedervorgangs der Radaufhängung in Kauf genommen werden kann. Durch den Winkel von 30° bis 50° lassen sich die Materialstärken am Querarm und am Längsarm besonders gering auslegen, da aufgrund der optimierten Anordnung des Querarmes und des Längsarmes und der entsprechenden Lager, welche mit dem Rahmen des Nutzfahrzeuges verbunden sind, bei geringem Gewicht hohe Kräfte übertragen werden können. Insbesondere bevorzugt ist es dabei, dass die Radaufhängung im Wesentlichen auf Druck- und Zugbelastung im Querarm und im Längsarm belastet wird.

In einer weiteren bevorzugten Ausführungsform weist der Querarm zwischen dem Querlager und dem Verbindungsabschnitt eine Querlänge auf, wobei das Querlager von der Längsebene mit zumindest dem 0,1-fachen der Querlänge, bevorzugt zumindest mit dem 0,5-fachen der Querlänge und insbesondere bevorzugt mit einem 0,15-bis 1,2-fachen der Querlänge beabstandet ist. Mit anderen Worten überragt der Querarm die Längsebene mit dem zumindest 0,1-fachen seiner Erstreckung zwischen dem Querlager und dem Verbindungsabschnitt. Durch das Auslegen des Querarmes derart, dass er über die Mitte des Fahrzeugrahmens des Nutzfahrzeuges hinausragt, lassen sich insbesondere in Kurvenfahrten des Nutzfahrzeuges Wankbewegungen des Rahmens und somit des gesamten Nutzfahrzeuges vermindern, da bei Einleiten der Kurvenfahrt und einer Kraftkomponente, die zum Einfedern des Nutzfahrzeuges führt, gleichzeitig die Gewichtskraft des Nutzfahrzeuges auf den über der Fahrzeugmitte hinweg angeordneten Querarm für eine Stabilisierung bzw. Wiedergeradestellung des Nutzfahrzeuges sorgt. Es hat sich gezeigt, dass dieser Effekt insbesondere dann zuverlässig zur Verfügung steht, wenn das Querlager des Querarmes mit zumindest dem 0,1-fachen der Querlänge von der Längsebene beabstandet ist. Bei Nutzfahrzeugen mit hohem Schwerpunkt, bei welchen die Kräfte, welche zur Wankbewegung führen, höher sind als bei im Vergleich dazu Nutzfahrzeugen mit niedrigem Schwerpunkt, hat es sich gezeigt, dass das Verhältnis des Abstandes des Querlagers von der Längsebene zur Querlänge zumindest ein 0,15-faches sein sollte. Darüber hinaus wird aber durch einen größeren Querarm auch ein höheres Gewicht und ein höherer vom Querarm beanspruchter Bauraum erzeugt. Daher hat es sich gezeigt, dass das Verhältnis des Abstandes des Querlagers von der Längsebene zur Querlänge nicht größer sein sollte als 1,2. Im Rahmen eines Größenverhältnisses von 0,1 bis 1,2 lassen sich somit sämtliche Vorteile der Auslegung des Querarmes derart, dass dieser über die Längsebene hinausragt, erzielen, wobei gleichzeitig das Gewicht und der von der Radaufhängung benötigte Bauraum im bevorzugten Rahmen gehalten werden kann.

Bevorzugt lassen das Querlager und das Längslager ausschließlich eine Verschwenkung um die Schwenkachse zu und sichern den Querarm und den Längsarm ansonsten gegen Verlagerung und Verschwenkung relativ zum Rahmen. Insbesondere bevorzugt sind das Querlager und das Längslager als einfache und robuste Festlager ausgebildet, welche lediglich eine Verschwenkung der Radaufhängung um die Schwenkachse relativ zum Rahmen des Nutzfahrzeuges zulassen. Auf diese Weise kann zum einen das Gewicht der beiden Lager gering gehalten werden und zum anderen können hohe Kräfte in den sehr einfach ausgebildeten Lagern übertragen werden. Insbesondere bevorzugt ist dabei, dass die Lager als einfache Lagerböcke ausgebildet sind, in welchen eine zylinderförmige Geometrie des Lagers mit einer entsprechenden Aufnahmegeometrie am Querarm oder am Längsarm eingreift. Vorzugsweise kann hierdurch der Verschleiß am Querlager und am Längslager derart minimiert werden, dass ein Austausch beider Lager im Verlauf der gesamten Lebensdauer eines Nutzfahrzeuges überflüssig wird. Insbesondere bevorzugt können auch reibungsmindernde Stoffe oder Beschichtungen in den Kontaktbereichen zwischen dem Querlager, dem Längslager und dem entsprechenden Querarm oder Längsarm der Radaufhängung eingesetzt werden.

Bevorzugt umfassen das Querlager und das Längslager jeweils einen Lagerbock und einen Lagerbolzen, wobei sich der Lagerbolzen jeweils im Wesentlichen längs der Schwenkachse erstreckt. Besonders bevorzugt ist der Lagerbolzen dabei zylindrisch und rotationssymmetrisch um die Schwenkachse ausgebildet. In der entsprechenden Aufnahme im Lagerbock ist dabei vorzugsweise gleitreibungsminderndes Material vorgesehen, welches den Verschleiß des Querlagers und des Längslagers deutlich minimiert. Der Vorteil einer einfachen Ausbildung des Querlagers und des Längslagers mit Lagerbock und Lagerbolzen ermöglicht zum einen eine besonders einfache Montage und erreicht zum anderen ein besonders robustes Lager, welches ohne Weiteres die hohen, auf den Querarm und dem Längsarm wirkenden Kräfte überträgt. Insbesondere kann durch die besonders einfache Ausbildung der Radaufhängung vermieden werden, dass Gelenklager oder sonstige empfindliche Lager am Querarm und am Längsarm benötigt werden.

Ferner bevorzugt ist am Querarm und/oder am Längsarm, der Schwenkachse gegenüberliegend, ein Lenkzapfen zur schwenkbaren Lagerung eines Fahrzeugrades unmittelbar oder mittelbar über zwischengelagerte Elemente, wie eine Radaufhängung, vorgesehen. Der Lenkzapfen ist vorzugsweise ein aus dem Stand der Technik bekannter Lenkzapfen zur schwenkbaren Festlegung eines Fahrzeugrades, welches beispielsweise über eine Lenkstange in der gewünschten Richtung relativ zum Rahmen des Nutzfahrzeuges gehalten wird. Vorzugsweise ist der Lenkzapfen dabei am Querarm, und/oder am Längsarm, oder im Bereich des Verbindungsabschnitts zwischen Querarm und Längsarm vorgesehen. In einer ersten bevorzugten Ausführungsform erstreckt sich dabei der Querarm über den Verbindungsabschnitt mit dem Längsarm hinaus, wobei an dem dem Querlager gegenüberliegenden distalen Ende des Querarms der Lenkzapfen vorgesehen ist. In einer alternativ bevorzugten Ausführungsform, mit welcher eine alternative Ausnutzung des Bauraums im Bereich des Nutzfahrzeugfahrwerkes erreicht werden kann, erstreckt sich der Längsarm über den Verbindungsabschnitt mit dem Querarm hinaus, wobei am zweiten distalen Ende des Längsarmes, welches dem Längslager gegenüberliegt, ein Lenkzapfen vorgesehen ist.

Besonders bevorzugt ist am Verbindungsabschnitt zwischen Querarm und Längsarm ein Aufnahmebereich für die Luftfeder eines Nutzfahrzeuges vorgesehen. Insbesondere kann sich dabei die Radaufhängung aus Querarm und Längsarm im Bereich des Verbindungsabschnitts an einer Luftfeder gegenüber dem Rahmen des Nutzfahrzeuges abstützen. Die Kraftübertragung von der Luftfeder auf die Radaufhängung im Bereich des Verbindungsabschnitts ist bevorzugt, da auf diese Weise ein günstiger Kraftfluss von dem Querarm und dem Längsarm in die Luftfeder und somit in die Abstützung am Rahmen des Nutzfahrzeuges erreicht werden kann. Auf diese Weise kann das Gewicht des Querarms und des Längsarms reduziert werden, da auch bei geringeren Materialquerschnitten hohe Kräfte übertragen werden können.

Weiterhin ist erfindungsgemäß ein Fahrwerksystem, umfassend eine erste Radaufhängung und eine zweite Radaufhängung vorgesehen, wobei die erste und die zweite Radaufhängung je einen Querarm und einen Längsarm aufweisen, welche jeweils in einem Verbindungsabschnitt aneinander festgelegt sind, wobei die erste Radaufhängung in einem ersten Querlager und einem ersten Längslager um eine erste Schwenkachse schwenkbar an einem Rahmen festlegbar ist, wobei die zweite Radaufhängung in einem zweiten Querlager und einem zweiten Längslager um eine zweite Schwenkachse schwenkbar an dem Rahmen festlegbar ist, wobei der erste Querarm und der zweite Querarm von einer Längsebene des Nutzfahrzeuges geschnitten werden, wobei das erste Querlager und das zweite Querlager von der Längsebene beabstandet sind. Das Fahrwerksystem umfasst somit zwei Radaufhängungen, welche die zuvor beschriebenen Merkmale aufweisen, nämlich das Hauptmerkmal, wonach ein Querarm und ein Längsarm vorgesehen sind und wobei sich der Querarm über die Längsebene des Nutzfahrzeuges hinaus erstreckt und wobei der Anbindungspunkt des Querarms im jeweils ersten bzw. zweiten Querlager von der Querebene beabstandet ist, also nicht von dieser geschnitten wird. Besonders bevorzugt ist die Längsebene des Nutzfahrzeuges dabei im Wesentlichen mittig zwischen der ersten Radaufhängung und der zweiten Radaufhängung angeordnet. Um den am Rahmen des Nutzfahrzeuges zur Verfügung stehenden Bauraum optimal auszunutzen, kann es bevorzugt sein, dass die erste Radaufhängung und die zweite Radaufhängung miteinander verschachtelt ausgebildet sind und insbesondere Kröpfungen und von einer geradlinigen Erstreckung abweichende Geometrien aufweisen, welche eine Verschwenkbewegung zulassen, ohne dass sich die erste Radaufhängung und die zweite Radaufhängung berühren.

Es versteht sich, dass die weiteren Vorteile und Merkmale der erfindungsgemäßen Radaufhängung und deren bevorzugter Ausführungsformen ebenfalls in dem erfindungsgemäßen Fahrwerksystem Anwendung finden können.

Bevorzugt weisen die Radaufhängungen, also die erste Radaufhängung und die zweite Radaufhängung, ihrer jeweiligen Schwenkachse gegenüberliegend jeweils einen Lenkzapfen auf. Durch die Ausstattung mit einem Lenkzapfen können die erste Radaufhängung und die zweite Radaufhängung als gelenkte Achse eines Nutzfahrzeuges eingesetzt werden.

Besonders bevorzugt sind der erste Lenkzapfen, an der ersten Radaufhängung, und der zweite Lenkzapfen, an der zweiten Radaufhängung, auf einer gemeinsamen Geraden angeordnet, wobei die Gerade ortogonal zur Längsebene verläuft. Unabhängig von der Anordnung der ersten Radaufhängung, insbesondere des ersten Querarms, und der zweiten Radaufhängung, insbesondere deren zweiten Querarms, bezogen auf die Längsebene, sind die Längszapfen auf einer gemeinsamen Geraden angeordnet, welche ortogonal oder senkrecht zur Längsebene steht. Es kann zu diesem Merkmal bevorzugt sein, dass der erste Querarm der ersten Radaufhängung und/oder der zweite Querarm der zweiten Radaufhängung sowie die jeweiligen Längsarme gekröpft oder abgewinkelt ausgebildet sind, so dass sich die Querlager und/oder die Längslager jeweils nicht auf einer gemeinsamen Geraden, welche ortogonal zur Längsebene steht, befinden müssen. Die Anordnung der Lenkzapfen auf einer gemeinsamen Geraden, welche ortogonal zur Längsebene ist, hat den Vorteil, dass die Symmetrie der Räder des Nutzfahrzeuges erreicht wird und Lenkausschläge in sowohl die erste als auch die zweite Richtung jeweils die gleichen Auswirkungen auf das Wank- und Fahrverhalten des Nutzfahrzeuges haben.

Bevorzugt sind die erste Radaufhängung und die zweite Radaufhängung längs der Längsebene versetzt zueinander angeordnet. Mit anderen Worten ist vorzugsweise die erste Radaufhängung etwas weiter vorn oder etwas weiter hinten am Nutzfahrzeug angeordnet als die zweite Radaufhängung. Auf diese Weise lässt sich eine Verschachtelung der ersten Radaufhängung und der zweiten Radaufhängung am Rahmen des Nutzfahrzeuges erreichen, wodurch der Bauraum des Nutzfahrzeuges besonders gut ausgenutzt werden kann und zum anderen aufwändige Geometrien, wie Verkröpfungen an den Querarmen und den Längsarmen der Radaufhängungen, nicht unbedingt erforderlich sind, um ein Zusammenstoßen der ersten Radaufhängung und der zweiten Radaufhängung bei einer Verschwenkbewegung um die jeweilige Schwenkachse zu verhindern. Als Verkröpfung wird im vorliegenden Fall vorzugsweise eine Abweichung von der einfachen im Wesentlichen geradlinigen Erstreckung der jeweiligen Geometrie des Querarms und/oder Längsarmes definiert.

In einer bevorzugten Ausführungsform steht die erste Schwenkachse in einem ersten Winkel zur Längsebene, wobei die zweite Schwenkachse in einem zweiten Winkel zur Längsebene steht, wobei der erste Winkel und der zweite Winkel vorzugsweise gleich sind. Insbesondere um bei Kurvenfahrten, welche nach rechts oder links gerichtet sind, die gleichen fahrdynamischen Effekte am Nutzfahrzeug zu erzielen, und somit das Nutzfahrzeug berechenbar für dessen Fahrer zu machen, ist es bevorzugt, dass die erste Schwenkachse und die zweite Schwenkachse im gleichen Winkel bezogen auf die Längsebene stehen. Insbesondere bevorzugt haben dabei die erste Schwenkachse und die zweite Schwenkachse einen gemeinsamen Schnittpunkt mit der Längsebene. Es lässt sich auf diese Weise im Wesentlichen symmetrisches Einfederverhalten des Nutzfahrzeuges sowohl bei Wankbewegungen nach rechts als auch nach links bezogen auf die Fahrtrichtung erreichen.

In einer alternativ bevorzugten Ausführungsform sind der erste Querarm und/oder der zweite Querarm derart gekröpft ausgebildet, dass sich die erste und die zweite Radaufhängung bei Verschwenkbewegungen um die Schwenkachsen nicht berühren. Weiterhin bevorzugt können auch der erste Längsarm und/oder der zweite Längsarm eine Kröpfung aufweisen, welche ebenfalls eine Kollision der Radaufhängungen im Betrieb des Nutzfahrzeuges vermeidet. Vorteil dieser Ausführungsform ist, dass die erste Radaufhängung und die zweite Radaufhängung bezogen auf die Längsebene auf gleicher Höhe angeordnet sein können, wobei einer der Querarme jeweils ober- bzw. unterhalb des jeweils anderen Querarms angeordnet ist und somit entsprechende Bewegungsspielräume zwischen den Querarmen und den Längsarmen der jeweils gegenüberliegenden Radaufhängungen erreicht werden. Der Nachteil eines etwas erhöhten Gewichts durch die Kröpfung der Querarme und der Längsarme wird durch eine besonders kompakte Bauweise des Fahrwerksystems mit der ersten Radaufhängung und der zweiten Radaufhängung aufgewogen. Insbesondere bevorzugt befinden sich dabei das erste Querlager und das zweite Querlager auf einer gemeinsamen Geraden, welche ortogonal zur Längsebene steht. Weiterhin bevorzugt ist auch das erste Längslager und das zweite Längslager jeweils auf einer gemeinsamen Geraden angeordnet, welche ortogonal zur Längsebene steht. Auf diese Weise ist auch die symmetrische Ausbildung und die gleichen Hebelarme bei Verschwenkbewegungen um die erste Schwenkachse und die zweite Schwenkachse erreicht, wodurch das symmetrische Fahrverhalten des Nutzfahrzeuges sowohl bei Kurvenfahrten nach rechts oder links und den entsprechend resultierenden Wankbewegungen erreicht ist.

Vorzugsweise weisen die Radaufhängungen an den Verbindungsabschnitten jeweils einen Bereich zur Festlegung einer Luftfeder auf. Um die jeweilige Radaufhängung an dem Fahrzeugrahmen abzustützen, ist vorzugsweise ein Federelement vorgesehen, welches insbesondere bevorzugt jeweils im Verbindungsabschnitt zwischen dem Querarm und dem Längsarm der Radaufhängung angeordnet und festgelegt ist. Alternativ zu einer Luftfeder können auch kostengünstigere Spiralfedern eingesetzt werden. Luftfedern wiegen die erhöhten Kosten und den erhöhten Aufwand für deren Betrieb jedoch durch eine höhere Flexibilität und Anpassbarkeit an das jeweilige Gewicht des Nutzfahrzeuges auf.

Weitere Vorteile und Merkmale der vorliegenden Erfindung ergeben sich aus der nachfolgenden Beschreibung mit Bezug auf die beigefügten Figuren. Es versteht sich, dass einzelne in nur einer der Ausführungsformen beschriebene Merkmale auch in weiteren Ausführungsformen zum Einsatz gelangen können, sofern dies nicht explizit ausgeschlossen wurde oder sich aufgrund technischer Gegebenheiten verbietet.

Es zeigen:
- Fig. 1: eine schematische Frontansicht eines erfindungsgemäßen Fahrwerksystems,
- Fig. 2: eine Draufsicht auf die Ausführungsform des in Fig. 1 gezeigten Fahrwerksystems,
- Fig. 3: eine Draufsicht auf eine weitere bevorzugte Ausführungsform eines erfindungsgemäßen Fahrwerksystems,
- Fig. 4: eine Frontansicht der in Fig. 3 gezeigten bevorzugten Ausführungsform des Fahrwerksystems, und
- Fig. 5: eine Draufsicht auf eine weitere bevorzugte Ausführungsform des erfindungsgemäßen Fahrwerksystems.

Zur Verdeutlichung der jeweils der ersten Radaufhängung und der zweiten Radaufhängung zugeordneten Bauteile und Merkmale ist die erste Radaufhängung 1A jeweils mit dem Buchstaben A gekennzeichnet. Die jeweils zur zweiten Radaufhängung 1 B gehörenden Bauteile und Merkmale sind jeweils mit dem Buchstaben B gekennzeichnet. Es versteht sich, dass Merkmale, die gleichermaßen sowohl die erste als auch die zweite Radaufhängung 1A, 1 B betreffen, jeweils auch als Radaufhängung 1 mit den jeweiligen Bauteilen und Merkmalen ohne einen dahinter beschriebenen Großbuchstaben gekennzeichnet sein können.

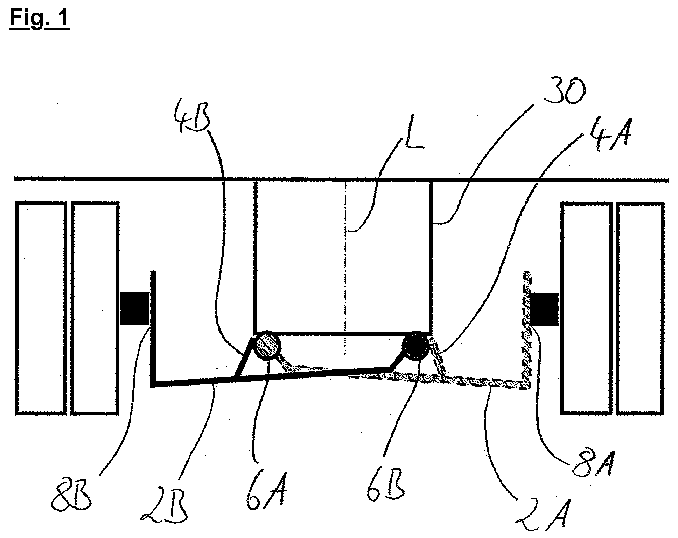

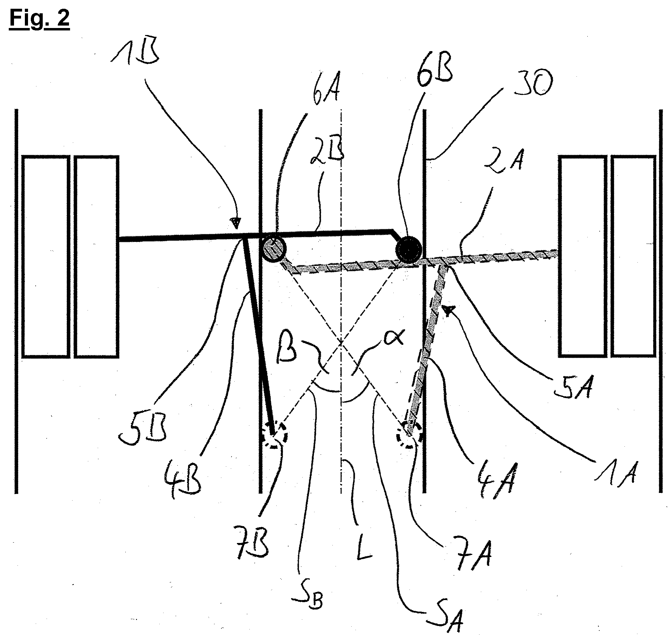

Bei der in Fig. 1 und 2 gezeigten Ausführungsform des erfindungsgemäßen Fahrwerksystems ist eine erste Radaufhängung 1A mit einem ersten Querarm 2A und einem ersten Längsarm 4A gezeigt, wobei der erste Querarm 2A in einem ersten Querlager 6A und der erste Längsarm 4A in einem ersten Längslager 7A am Rahmen 30 eines Nutzfahrzeuges festgelegt sind. Durch die Ausgestaltung des ersten Querarms 2A und des ersten Längsarms 4A ergibt sich eine erste Schwenkachse S_{A} der ersten Radaufhängung bezogen auf den Rahmen 30 des Nutzfsahrzeugs. Die erste Schwenkachse ist dabei vorzugsweise mit einem ersten Winkel α bezogen auf die Längsebene L verschwenkt angeordnet. Analog hierzu weist die zweite Radaufhängung 1 B die mit gleichen Zahlen gekennzeichneten Merkmale auf, wobei die zweite Radaufhängung 1 B um einen zweiten Winkel β zur Längsebene verschwenkbar angeordnet ist. In der Figur ist zu erkennen, dass der erste Querarm 2A und der zweite Querarm 2B jeweils gekröpft ausgebildet sind, so dass die erste Radaufhängung 1A und die zweite Radaufhängung 1 B jeweils verschachtelt zueinander im Bereich des Rahmens 30 des Nutzfahrzeuges angeordnet sind. Auf diese Weise lässt sich der Bauraum am Rahmen 30 des Nutzfahrzeuges optimal ausnutzen, wobei die jeweiligen Aufhängungspunkte für die schematisch gekennzeichneten Räder vorzugsweise auf einer gemeinsamen Geraden, welche im Wesentlichen ortogonal zur Längsebene L steht, angeordnet sein können. Ebenfalls schematisch sind der erste Verbindungsabschnitt 5A und der zweite Verbindungsabschnitt 5B dargestellt, in welchen die jeweiligen Querarme 2 mit den armen 4 verbunden sind.

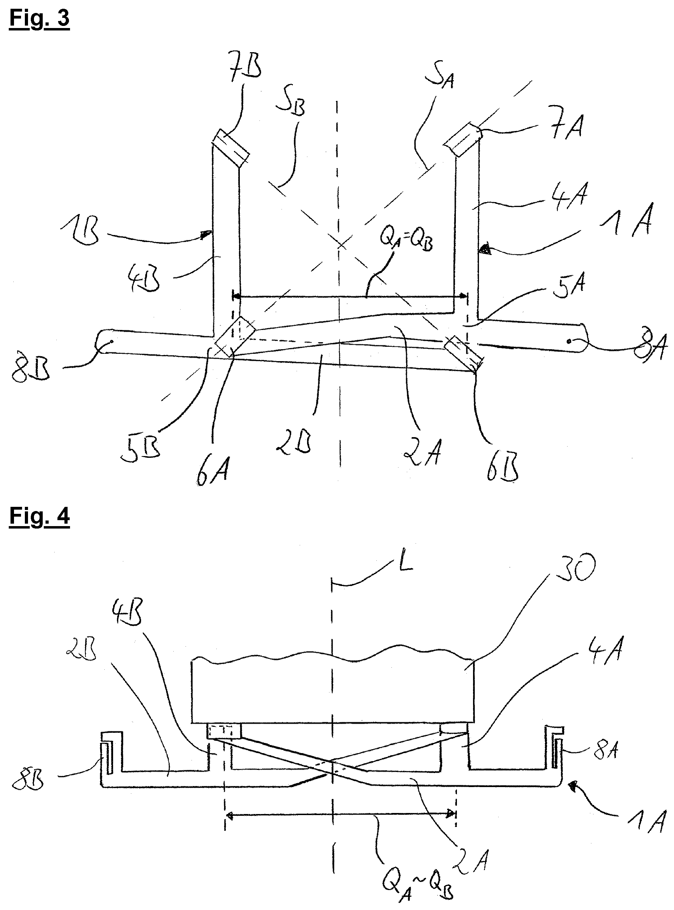

Fig. 3 und 4 zeigen eine weitere bevorzugte Ausführungsform eines erfindungsgemäßen Fahrwerksystems, bei welchem zusätzlich zu der in Fig. 1 und 2 dargestellten Ausführungsform die Querlänge Q des jeweiligen ersten Querarms 2A und des zweiten Querarms 2B gekennzeichnet ist. Bei der in Fig. 3 dargestellten Ausführungsform ist dabei die erste Querlänge Q_{A} im Wesentlichen gleich der zweiten Querlänge Q_{B}, wodurch sich eine im Wesentlichen symmetrische Verschwenkbewegung der Verbindungsabschnitte 5, 5A, 5B ergibt. Gleichzeitig ist es bevorzugt, dass das erste Querlager 6A und das zweite Querlager 6B im Wesentlichen im gleichen Abstand und entlang einer gemeinsamen Geraden, welche ortogonal zur Längsebene L ausgerichtet ist, am Rahmen 30 des Nutzfahrzeuges vorgesehen sind.

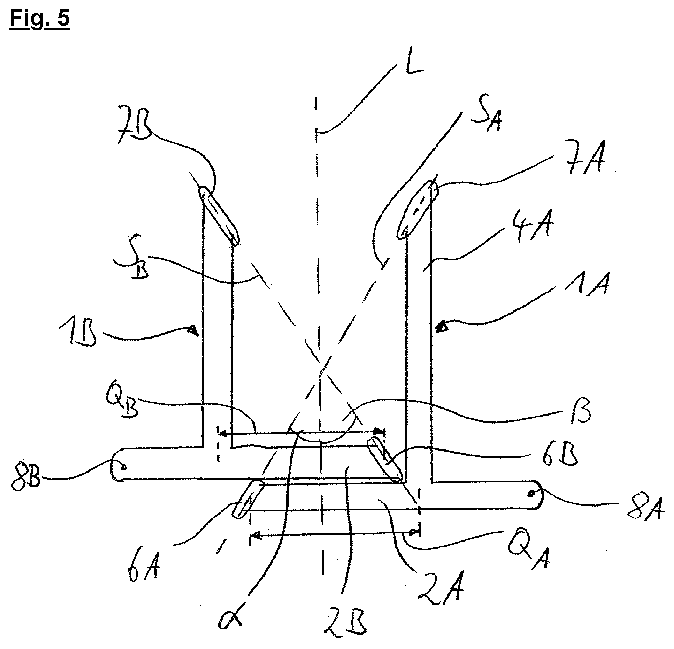

Fig. 5 zeigt eine weitere Ausführungsform eines erfindungsgemäßen Fahrwerksystems, bei welcher im Unterschied zu den in Fig. 1 bis Fig. 4 gezeigten Ausführungsformen die erste Radaufhängung 1A und die zweite Radaufhängung 1 B längs der Längsebene L im Wesentlichen etwas versetzt zueinander angeordnet sind. Mit dieser sehr einfachen Ausführungsform können Kröpfungen an den Querarmen 2A, 2B und Längsarmen 4A, 4B, wie in Fig. 1 bis Fig. 4 erforderlich, vermieden werden. Es kann auf diese Weise bei geringem Gewicht der Radaufhängungen 1A, 1 B sowohl eine hohe Brems- und Beschleunigungskraft als auch hohe Querkräfte, welche vom Rad über die Lenkzapfen 8A, 8B an die jeweiligen Radaufhängungen 1A, 1 B übertragen werden, aufgenommen werden.

**Bezugszeichen:**

| | | | | | |
|---|---|---|---|---|---|
| 1 | - | Radaufhängung | 7 | - | Längslager |
| 1A | - | erste Radaufhängung | 7A | - | erstes Längslager |
| 1B | - | zweite Radaufhängung | 7B | - | zweites Längslager |
| 2 | - | Querarm | 8 | - | Lenkzapfen |
| 2A | - | erster Querarm | 8A | - | erster Lenkzapfen |
| 2B | - | zweiter Querarm | 8B | - | zweiter Lenkzapfen |
| 4 | - | Längsarm | 30 | - | Rahmen |
| 4A | - | erster Längsarm | L | - | Längsebene |
| 4B | - | zweiter Längsarm | Q | - | Querlänge |
| 5 | - | Verbindungsabschnitt | Q_{A} | - | erste Querlänge |
| 5A | - | erster Verbindungsabschnitt | Q_{B} | - | zweite Querlänge |
| 5B | - | zweiter Verbindungsabschnitt | S | - | Schwenkachse |
| 6 | - | Querlager | S_{A} | - | erste Schwenkachse |
| 6A | - | erstes Querlager | S_{B} | - | zweite Schwenkachse |
| 6B | - | zweites Querlager | | | |

## Patentansprüche

1. Radaufhängung (1), insbesondere für Nutzfahrzeuge, umfassend einen Querarm (2) und einen Längsarm (4),
wobei der Querarm (2) und der Längsarm (4) in einem Verbindungsabschnitt (5) aneinander festgelegt sind, wobei der Querarm (2) in einem Querlager (6) und der Längsarm (4) in einem Längslager (7) um eine gemeinsame Schwenkachse (S) am Rahmen (30) eines Nutzfahrzeuges festlegbar sind,
wobei eine Längsebene (L) den Querarm (2) schneidet, und
wobei das Querlager (6) von der Längsebene (L) beabstandet ist.

2. Radaufhängung (1) nach Anspruch 1,
wobei die Schwenkachse (S) zur Längsebene (L) in einem ersten Winkel (α) steht,
wobei der erste Winkel (α) größer 0° und kleiner 90° ist.

3. Radaufhängung (1) nach Anspruch 2,
wobei der erste Winkel (α) 5° bis 75°, vorzugsweise 10° bis 65° und besonders bevorzugt ca. 30° bis 50° beträgt.

4. Radaufhängung (1) nach einem der vorhergehenden Ansprüche,
wobei der Querarm (2) zwischen dem Querlager (6) und dem Verbindungsabschnitt (5) eine Querlänge (Q) aufweist,
wobei das Querlager (6) von der Längsebene (L) mit zumindest dem 0,1-fachen der Querlänge (Q), bevorzugt zumindest dem 0,15-fachen der Querlänge und insbesondere bevorzugt einem 0,15- bis 1,2-fachen der Querlänge (Q) beabstandet ist.

5. Radaufhängung (1) nach einem der vorhergehenden Ansprüche,
wobei das Querlager (6) und das Längslager (7) ausschließlich eine Verschwenkung um die Schwenkachse (S) zulassen und den Querarm (2) und den Längsarm (4) ansonsten gegen Verlagerung und Verschwenkung relativ zum Rahmen (30) sichern.

6. Radaufhängung (1) nach einem der vorhergehenden Ansprüche,
wobei das Querlager (6) und das Längslager (7) jeweils einen Lagerbock (10) und einen Lagerbolzen (11) umfassen,
wobei sich der Lagerbolzen (11) jeweils im Wesentlichen längs der Schwenkachse (S) erstreckt.

7. Radaufhängung (1) nach einem der vorhergehenden Ansprüche,
wobei am Querarm (2) und/oder am Längsarm (4), der Schwenkachse (S) gegenüberliegend ein Lenkzapfen (8) zur schwenkbaren Lagerung eines Fahrzeugrades vorgesehen ist.

8. Fahrwerksystem umfassend eine erste Radaufhängung (1A) und eine zweite Radaufhängung (1 B),
wobei die erste und die zweite Radaufhängung (1A, 1 B) je einen Querarm (2A, 2B) und einen Längsarm (4A, 4B) aufweisen, welche jeweils in einem Verbindungsabschnitt (5A, 5B) aneinander festgelegt sind,
wobei die erste Radaufhängung (1A) in einem ersten Querlager (6A) und einem ersten Längslager (7A) um eine erste Schwenkachse (S_{A}) schwenkbar an einem Rahmen (30) festlegbar ist,
wobei die zweite Radaufhängung (1 B) in einem zweiten Querlager (6B) und einem zweiten Längslager (7B) um eine zweite Schwenkachse (S_{B}) schwenkbar an dem Rahmen (30) festlegbar ist,
wobei der erste Querarm (2A) und der zweite Querarm (2B) von einer Längsebene (L) des Nutzfahrzeuges geschnitten werden,
wobei das erste Querlager (6A) und das zweite Querlager (6B) von der Längsebene (L) beabstandet sind

9. Fahrwerkssystem nach Anspruch 8,
wobei die Radaufhängungen (1A, 1 B) der jeweiligen Schwenkachse (S_{A}, S_{B}) gegenüberliegend jeweils einen Lenkzapfen (8A, 8B) aufweisen.

10. Fahrwerkssystem nach Anspruch 9,
wobei der erste Lenkzapfen (8A) und der zweite Lenkzapfen (8B) auf einer gemeinsamen Geraden angeordnet sind, welche orthogonal zur Längsebene (L) verläuft.

11. Fahrwerkssystem nach einem der Ansprüche 8 bis 10,
wobei die erste Radaufhängung (1A) und die zweite Radaufhängung (1 B) längs der Längsebene (L) versetzt zueinander angeordnet sind.

12. Fahrwerkssystem nach einem der Ansprüche 8 bis 11,
wobei die erste Schwenkachse (S_{A}) in einem ersten Winkel (α) zur Längsebene (L) steht,
wobei die zweite Schwenkachse (S_{B}) in einem zweiten Winkel (β) zur Längsebene (L) steht,
wobei der erste Winkel (α) und der zweite Winkel (β) gleich sind.

13. Fahrwerkssystem nach einem der Ansprüche 7 bis 12,
wobei der erste Querarm (2A) und/oder der zweite Querarm (2B) gekröpft ausgebildet ist, derart, dass sich die erste und die zweite Radaufhängung (1A, 1 B) bei Schwenkbewegungen um die Schwenkachsen (S_{A}, S_{B}) nicht berühren.

14. Fahrwerkssystem nach einem der Ansprüche 8 bis 13,
wobei die Radaufhängungen (1A, 1 B) an den Verbindungsabschnitten (5A, 5B) einen Bereich zur Festlegung einer Luftfeder aufweisen.
